# EUROPEAN PATENT SPECIFICATION

(11) **EP 4 279 823 B1**
(45) Date of publication and mention of the grant of the patent: **19.03.2025**
(21) Application number: 23174191.9
(22) Date of filing: 18.05.2023
(51) Int. Cl.: F24D 19/10, F24F 11/65, F24H 15/254, F24H 15/258, F24H 15/265, F24H 15/429, F24D 3/08, F24D 3/18, F24D 17/00, F24D 17/02, F24F 120/10, F24F 130/20

(54) **HYDRAULIC MODULE AND HYDRAULIC MODULE CONTROL SYSTEM FOR FLOOR HEATING MULTI-SPLIT AIR CONDITIONER, AND CONTROL METHOD THEREOF**
HYDRAULIKMODUL UND HYDRAULICMODULSTEUERUNGSSYSTEM FÜR MULTISPLIT-BODENHEIZUNGSKLIMAANLAGE, UND STEUERUNGSVERFAHREN DAFÜR
MODULE HYDRAULIQUE ET SYSTÈME DE COMMANDE DE MODULE HYDRAULIQUE POUR CLIMATISEUR MULTI-BLOC DE CHAUFFAGE AU SOL, ET SON PROCÉDÉ DE COMMANDE

(30) Priority: 18.05.2022 CN 202210552018
(43) Date of publication of application: 22.11.2023
(73) Proprietor: Guangdong Carrier HVAC Co., Ltd., Foshan, Guangdong 528244 (CN)
(72) Inventor: LIANG, Yingbiao, Foshan, 528244 (CN); XIONG, Long, Foshan, 528244 (CN)
(74) Representative: Dehns

(56) References cited:
- EP-A1- 2 103 884
- CN-A- 110 793 135
- CN-A- 111 981 624
- CN-A- 112 594 866

## Description

The present invention relates to the technical field of air conditioners, in particular to a hydraulic module and hydraulic module control system for a floor heating multi-split air conditioner and a control method thereof.

In the field of air conditioners, multiple temperature zones are very common, the temperature output to a terminal of an air conditioning system may be precisely controlled through an electronic expansion valve, and then different temperature zones are achieved through air supplying of an indoor fan. However, in a water system, controlling the water flow cannot change the temperature of water per se, and the heat exchange effect of floor heating is relatively fixed. For a system having a plurality of temperature zones, the implementation of the water system is more complex.

For the above problems, the present invention provides a simple hydraulic module control system of a floor heating multi-split air conditioner and a control method of the hydraulic module control system. One hydraulic module controls cooling and heating requirements of a plurality of rooms, and meanwhile, different requirements of different rooms are met through a plurality of temperature controllers.

CN 110 793 135 A discloses a floor heating-air conditioning all-in-one machine for heating or cooling multiple rooms, which comprises an outdoor unit and a water module for circulating cold and hot water to indoor end equipment.

CN 111 981 624 A discloses a floor heating air conditioner and a control method thereof comprising multiple units, wherein the floor heating air conditioner operates in a floor heating mode, an air conditioning mode, or a mixed heating mode.

EP 2 103 884 A1 discloses room heating comprising a heat pump and a method for controlling the room heating, wherein a flow temperature of a heating medium is set based on an outdoor temperature and a room temperature of the room to be heated.

CN112594866 A discloses an anti-freezing control system and control method of hydraulic modules of a multi-split air conditioner.

According to a first aspect, the present invention provides a hydraulic module and a hydraulic module control system for a floor heating multi-split air conditioner. The floor heating multi-split air conditioner includes a hydraulic module and a plurality of floor heating modules connected with the hydraulic module, and the plurality of floor heating modules are correspondingly arranged in a plurality of rooms. The hydraulic module control system includes: a control module and a plurality of temperature controllers corresponding to the plurality of rooms. The temperature controllers are in signal connection with the hydraulic module, and are configured to set a set temperature in each room and an operation mode of the hydraulic module. The control module is in signal connection with the hydraulic module, and is configured to: set preset water outlet temperature values under the different operation modes of the hydraulic module; and control the hydraulic module to operate according to received operation modes set by the temperature controllers and the set temperatures, and control the hydraulic module to operate in a cooling mode or a heating mode preferentially according to a comparison result of an outdoor ambient temperature and a first temperature preset value when both a cooling operation mode and a heating operation mode are received. The hydraulic module includes a water inlet pipe, a water outlet pipe, a master two-way valve, a master three-way valve and a water tank, inlet ends of the floor heating modules communicate with the water outlet pipe, outlet ends of the floor heating modules communicate with the water inlet pipe, and each floor heating module is provided with a separate valve element. The master three-way valve is connected with the water outlet pipe, the water tank and the inlet ends of the plurality of floor heating modules. The master two-way valve is connected with the outlet ends of the plurality of floor heating modules and the water inlet pipe. The hydraulic module further includes a hydraulic heat exchanger, a built-in water pump, an electric heating unit and an external water pump, the hydraulic heat exchanger includes a first joint connected with an outdoor unit high-pressure air pipe, a second joint connected with an outdoor unit liquid pipe, a third joint connected with the built-in water pump and a fourth joint connected with the electric heating unit, an inlet of the built-in water pump is connected with the water inlet pipe, an outlet of the electric heating unit is connected with the water outlet pipe, and the external water pump is arranged between the outlet ends and the master two-way valve.

According to the technical solution, in the present invention, one hydraulic module corresponds to the plurality of floor heating modules, through connection and control manners of the temperature controllers in the rooms and the hydraulic module as well as the control module and the hydraulic module, the temperature in each room is independently controlled, the system structure is simplified, the system cost is lowered, and cooling and heating are achieved through water circulation to improve the comfort of the system; and when different cooling/heating requirements of different rooms are received, the operation mode that is selected preferentially is judged in combination with the outdoor ambient temperature, so that different requirements of different rooms are met while the system energy consumption is lowered.

According to the technical solution, the hydraulic module of the floor heating multi-split air conditioner of the present invention is simple in structure, which is conductive to lowering the cost.

Optionally, when the hydraulic module operates in the cooling mode, the built-in water pump and the external water pump are controlled to be started, the separate valve elements corresponding to a heating room and a shut-down room respectively are controlled to be closed, and the separate valve element corresponding to a cooling room is controlled to be opened.

Optionally, when the hydraulic module operates in the heating mode, the built-in water pump and the external water pump are controlled to be started, the separate valve elements corresponding to the cooling room and the shut-down room respectively are controlled to be closed, and the separate valve element corresponding to the heating room is controlled to be opened.

According to the technical solution, in different modes, the room temperature in each room may be controlled through opening and closing of the separate valve elements according to the cooling and heating requirements of the different rooms, so that a plurality of temperature zones are controlled respectively.

A temperature detection module may be further included, and is configured to detect a room temperature in each room.

The control module is configured to: control opening and closing of the separate valve element in each room according to a comparison result of the room temperature in each room and the corresponding set temperature, and control the hydraulic module to shut down when the room temperatures in all the rooms reach the set temperature.

According to the technical solution, when the room temperatures reach the set temperature, the separate valve elements are closed to lower energy consumption output of the hydraulic module, which is conductive to saving the energy consumption; and when all the room temperatures reach the set temperature, the hydraulic module is shut down, which is conductive to lowering the system energy consumption and improving the economy.

Optionally, when a difference value between the room temperature in each room and the set temperature is greater than a second temperature preset value and lasts for a predetermined period of time, the temperature controller in the room sends a request to the hydraulic module, and the hydraulic module is controlled to increase the amount of heating/cooling by modifying a set temperature correction value and controlling the built-in water pump to be fixed to a maximum gear.

According to the technical solution, the amount of cooling or heating is increased by modifying the set temperature correction value and fixing the built-in water pump to the maximum gear, so that the water temperature increasing or decreasing rate can be increased to meet user requirements.

An infrared detector may be further included, and is configured to detect whether a person is in each room, and the control module adjusts the set temperature or controls starting and shutdown of the hydraulic module according to a detection result of the infrared detector.

According to the technical solution, by judging whether a person is in a room, the set temperature is adjusted or starting and shutdown of the hydraulic module are controlled, which is conductive to saving the energy consumption and improving the economy.

An ambient brightness detection module may be further included, and is configured to detect brightness in each room, and the control module controls a rotating speed of an indoor fan of the floor heating multi-split air conditioner, a rotating speed of the built-in water pump and a rotating speed of the external water pump according to a brightness detection result of the ambient brightness detection module.

According to the technical solution, when the brightness of a room is lower than a regulated value, the rotating speed of the indoor fan, the rotating speed of the built-in water pump and the rotating speed of the external water pump are lowered, which is conductive to further saving energy consumption and improving the system economy.

The control module may be further configured to: set starting time and a starting period of a domestic hot water mode operated by the hydraulic module, and control the master two-way valve and the external water pump to be closed and shut down and control the master three-way valve to be opened during the starting time.

According to the technical solution, the domestic hot water mode may be operated regularly according to needs to obtain domestic hot water, and the use convenience is improved; and manual intervention is reduced.

According to a second aspect, the present invention additionally provides a control method of the above hydraulic module and hydraulic module control system, including the following steps:
setting a set temperature in each room and an operation mode of a hydraulic module;
setting preset water outlet temperature values under a cooling mode and/or a heating mode of the hydraulic module; and controlling the hydraulic module to operate according to operation modes set by temperature controllers and preset water outlet temperature values corresponding to the set temperatures, and controlling the cooling mode or the heating mode to be operated preferentially according to a comparison result of an outdoor ambient temperature and a third temperature preset value when the hydraulic module simultaneously receives the operation modes of cooling and heating.

According to the present invention, through connection and control manners of the temperature controllers in the rooms and the hydraulic module as well as the control module and the hydraulic module, the temperature in each room is independently controlled, the system structure is simplified, the system cost is lowered, and cooling and heating are achieved through water circulation to improve the comfort of the system; and when different cooling/heating requirements of different rooms are received, the operation mode that is selected preferentially is judged in combination with the outdoor ambient temperature, so that different requirements of different rooms are met while the system energy consumption is lowered and system operating reliability is guaranteed.

Certain exemplary embodiments will now be described in greater detail by way of example only and with reference to the accompanying drawings in which:
FIG. 1 is a schematic structural diagram of a hydraulic module control system of a floor heating multi-split air conditioner.
FIG. 2 is a schematic structural diagram of a hydraulic module of a floor heating multi-split air conditioner.
FIG. 3 is a schematic structural diagram of a temperature controller.

### Reference numerals:

Hydraulic module 1; water inlet pipe 11; water outlet pipe 12; master two-way valve 13; master three-way valve 14; water tank 15; hydraulic heat exchanger 16; built-in water pump 17; electric heating unit 18; external water pump 19; floor heating module 2; separate valve element 20; temperature controller 3; temperature detection module 31; infrared detector 32; ambient brightness detection module 33; and control module 4.

The technical solution in embodiments of the present invention will be clearly and completely described below in combination with the accompanying drawings in the embodiments of the present invention. Apparently, the described embodiments are only part of the embodiments of the present invention, not all of them. The purpose of providing these implementations is to make the contents disclosed in the present invention understood more thoroughly and comprehensively. Based on the embodiments of the present invention, all other embodiments obtained by those of ordinary skill in the art without any creative work fall within the protection scope of the present invention that is defined in the appended claims.

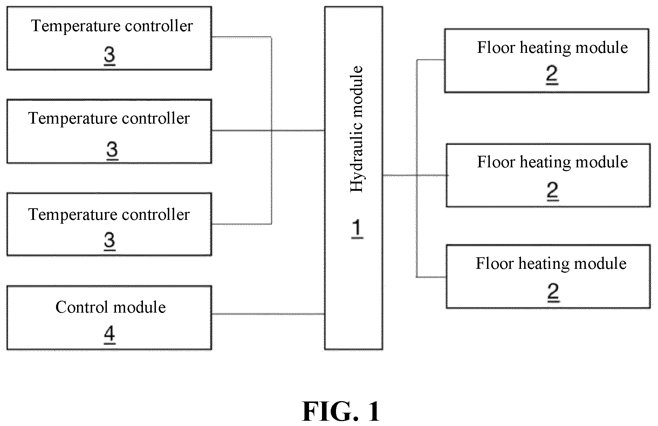

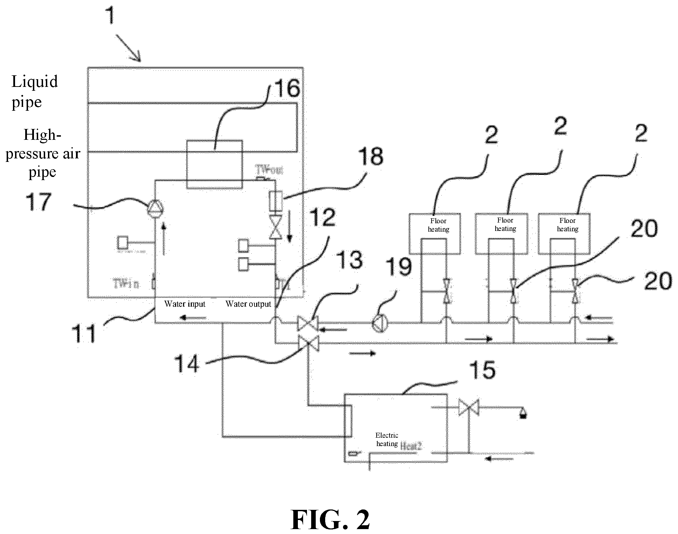

Referring to FIG. 1 and FIG. 2, the present invention provides a hydraulic module control system of a floor heating multi-split air conditioner. The floor heating multi-split air conditioner includes a hydraulic module 1 and a plurality of floor heating modules 2 connected with the hydraulic module 1, the plurality of floor heating modules 2 are arranged in a plurality of rooms in a one-to-one correspondence, and the floor heating modules 2 are specifically floor heating coil pipes arranged in the rooms. The hydraulic module control system includes: a control module and a plurality of temperature controllers corresponding to the plurality of rooms. The hydraulic module control system includes: a control module 4 and the plurality of temperature controllers 3 corresponding to the rooms. The temperature controllers 3 are in signal connection with the hydraulic module 1, and are configured to set a set temperature in each room (air temperature in each room) and an operation mode of the hydraulic module 1. The control module 4 is in signal connection with the hydraulic module 1, and is configured to: set preset water outlet temperature values under different operation modes (e.g., a cooling mode, a heating mode and a domestic hot water mode) of the hydraulic module 1; and control the hydraulic module 1 to operate according to received operation modes set by the temperature controllers 3 and preset water outlet temperature values corresponding to the set temperatures, and control the hydraulic module 1 to operate in the cooling mode or the heating mode preferentially according to a comparison result of an outdoor ambient temperature and a first temperature preset value when the both a cooling operation mode and a heating operation mode are received.

Through the above manner, one hydraulic module 1 corresponds to the plurality of floor heating modules 2, and through connection and control manners of the temperature controllers 3 in the rooms and the hydraulic module 1 as well as the control module 4 and the hydraulic module 1, the temperature in each room is independently controlled, the system structure is simplified, the system cost is lowered, and cooling and heating are achieved through water circulation to improve the comfort of the system; and when different cooling/heating requirements of different rooms are received, the operation mode that is selected preferentially is judged in combination with the outdoor ambient temperature, so that different requirements of different rooms are met while the system energy consumption is lowered and system operating reliability is guaranteed; and the system operating reliability is guaranteed.

The hydraulic module 1 includes a water inlet pipe 11, a water outlet pipe 12, a master two-way valve 13, a master three-way valve 14 and a water tank 15, inlet ends of the floor heating coil pipes communicate with the water outlet pipe 12 of the hydraulic module 1, outlet ends of the floor heating coil pipes communicate with the water inlet pipe 11, and each floor heating coil pipe is provided with a separate valve element 20. The master three-way valve 14 is connected with the water outlet pipe 12, the water tank 15 and the inlet ends of the plurality of floor heating coil pipes. The master two-way valve 13 is connected with the outlet ends of the plurality of floor heating modules 2 and the water inlet pipe 11. The hydraulic module 1 further includes a hydraulic heat exchanger 16, a built-in water pump 17, an electric heating unit 18 and an external water pump 19. The hydraulic heat exchanger 16 includes a first joint connected with an outdoor unit high-pressure air pipe, a second joint connected with an outdoor unit liquid pipe, a third joint connected with the built-in water pump 17 and a fourth joint connected with the electric heating unit 18. An inlet of the built-in water pump 17 is connected with the water inlet pipe 11, an outlet of the electric heating unit 18 is connected with the water outlet pipe 12, and the external water pump 19 is arranged between the outlet ends of the floor heating coil pipes and the master two-way valve 13. The hydraulic module 1 of the present invention is simple in structure, which is conductive to saving the cost and lowering the mounting difficulty.

In a preferred implementation, when the hydraulic module 1 operates in the cooling mode, the built-in water pump 17 and the external water pump 19 are controlled to be started, the separate valve elements 20 corresponding to a heating room and a shut-down room respectively are controlled to be closed, and the separate valve element 20 corresponding to a cooling room is controlled to be opened. In a specific example, a room having a cooling requirement is defined as the cooling room, a room having a heating requirement is defined as the heating room, a room having no cooling/heating requirement is defined as the shut-down room. When the hydraulic module 1 operates in the heating mode, the built-in water pump 17 and the external water pump 19 are controlled to be started, the separate valve elements 20 corresponding to the cooling room and the shut-down room respectively are controlled to be closed, and the separate valve element 20 corresponding to the heating room is controlled to be opened. Through the above manner, in different modes, the room temperature in each room may be controlled through opening and closing of the separate valve elements 20 according to the cooling and heating requirements of the different rooms, so that a plurality of temperature zones are controlled respectively.

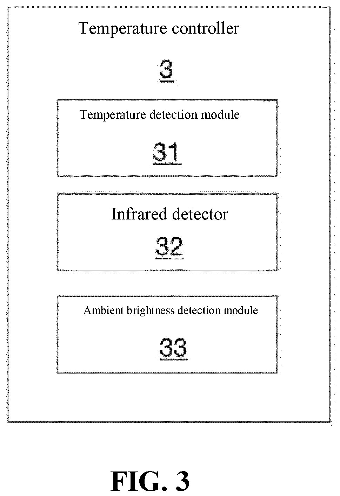

In a preferred implementation, as shown in FIG. 3, the temperature controller 3 includes a temperature detection module 31 which is configured to detect the room temperature in each room. The control module 4 is configured to: control opening and closing of the separate valve element 20 in each room according to a comparison result of the room temperature in each room and the corresponding set temperature, and control the hydraulic module 1 to shut down when the room temperatures in all the rooms reach the set temperature. In a specific example, the temperature detection module 31 is a temperature probe. Through the above manner, when the room temperatures reach the set temperature, the separate valve elements 20 are closed to lower energy consumption output of the hydraulic module 1, which is conductive to saving the energy consumption; and when all the room temperatures reach the set temperature, the hydraulic module 1 is shut down, which is conductive to lowering the system energy consumption and improving the economy.

In a preferred implementation, when a difference value between the room temperature in each room and the set temperature is greater than a second temperature preset value (may be set on the temperature controllers 3) and lasts for a predetermined period of time, the temperature controller 3 in the room sends a request to the hydraulic module 1, and the hydraulic module 1 is controlled to increase the amount of heating/cooling by modifying a set temperature correction value and controlling the built-in water pump 17 to be fixed to a maximum gear. The amount of cooling or heating is increased by modifying the set temperature correction value and fixing the built-in water pump 17 to the maximum gear, so that the water temperature increasing or decreasing rate can be increased to meet user requirements. In an example, the control module 4 sets 60°C for water output, after a person exits from a room or at nightfall, the temperature controllers 3 send data to the hydraulic module 1 to start modification (taking modification of 2°C as an example), and the preset water outlet temperature value in actual operation of the hydraulic module 1 is 58°C.

Continuing to refer to FIG. 3, in a preferred implementation, the temperature controller 3 further includes an infrared detector 32 and an ambient brightness detection module 33, wherein the infrared detector 32 is configured to detect whether a person is in each room, and the control module 4 adjusts the set temperature or controls starting and shutdown of the hydraulic module 1 according to a detection result of the infrared detector 32. By judging whether a person is in a room, the set temperature is adjusted or starting and shutdown of the hydraulic module 1 are controlled, which is conductive to saving the energy consumption and improving the economy. The ambient brightness detection module 33 is configured to detect brightness in each room, and the control module 4 controls a rotating speed of an indoor fan (not shown in the figures) of the floor heating multi-split air conditioner, a rotating speed of the built-in water pump 17 and a rotating speed of the external water pump 19 according to a brightness detection result of the ambient brightness detection module 33. Specifically, when the brightness of a room is lower than a regulated value, the rotating speed of the indoor fan, the rotating speed of the built-in water pump 17 and the rotating speed of the external water pump 19 are lowered, which is conductive to further saving energy consumption and improving the economy. In a specific example, the ambient brightness detection module 33 is a photoresistor.

Further, when the infrared detectors 32 detect that there is no person in a room or the ambient brightness is lower than a preset value, the temperature controllers 3 send data to the hydraulic module 1 to start modifying the set temperature correction value, so that an actual operation temperature of the hydraulic module 1 is lower than the preset water outlet temperature value corresponding to the set temperature, and the energy consumption is lowered.

By integrating the temperature detection modules 31, the infrared detectors 32 and the ambient brightness detection modules 33 in the temperature controllers 3, the utility of the temperature controllers 3 is improved, and through the temperature controllers integrating temperature detection, infrared detection and brightness detection functions, the hydraulic module 1 of the floor heating multi-split air conditioner can be made to operate in a more energy-saving mode, and the system energy consumption and the operating cost are lowered.

In a preferred implementation, temperature detection units (TW-out, TW-in, T1 and T5) arranged at an outlet of the hydraulic heat exchanger 16, the water inlet pipe 11, the water outlet pipe 12 and the water tank 15 are further included, and specifically, the temperature detection units are temperature sensors and are configured to detect a water outlet temperature of the hydraulic heat exchanger, a water inlet temperature of the hydraulic module 1, a water outlet temperature of the hydraulic module 1 and a temperature of the water tank.

In a preferred implementation, an expansion valve arranged between the water inlet pipe 11 and the built-in water pump 17, a water flow switch arranged at an outlet of the electric heating unit 18, an exhaust valve close to the water flow switch and a safety valve arranged at the outlet of the electric heating unit 18 with the exhaust valve are further included, so that the operating reliability of the hydraulic module 1 is improved.

In a preferred implementation, the control module 4 is configured to: set starting time and a starting period of a domestic hot water mode operated by the hydraulic module 1, and control the master two-way valve 13 and the external water pump 19 to be closed and shut down and control the master three-way valve 14 to be opened during the starting time. Through the above manner, the domestic hot water mode may be operated regularly according to needs to obtain domestic hot water, and the use convenience is improved; and manual intervention is reduced. Specifically, a water inlet pipe of the water tank 15 communicates with the master three-way valve 14, and a water outlet pipe of the water tank 15 communicates with the water inlet pipe 11 of the hydraulic module 1. An auxiliary electric heating unit is arranged in the water tank 15. An outlet side of the water tank 15 is connected with user side water, and an inlet side of the water tank 15 communicates with a tap water pipeline so as to conveniently supplement water into the water tank 15 according to needs.

It should be noted that, the floor heating multi-split air conditioner connected with the hydraulic module 1 includes a compressor (not shown in the figures), an indoor unit (not shown in the figures), an outdoor unit (not shown in the figures), the indoor fan (not shown in the figures), an outdoor fan (not shown in the figures), a four-way valve (not shown in the figures), a coolant pipeline (not shown in the figures) and other basic elements of an air conditioning system, they are common application forms in the art and are not repeated here, and the control module 4 may be configured as a master switch for operation of the floor heating multi-split air conditioner and the hydraulic module 1. In addition, the arrangement form or connection form of the temperature controllers 3 in the rooms is not limited in the implementations of the present invention.

Corresponding to the hydraulic module and hydraulic module control system for the floor heating multi-split air conditioner, the present invention additionally provides a control method of the above hydraulic module and hydraulic module control system for the floor heating multi-split air conditioner, including the following steps:
setting a set temperature in each room and an operation mode of a hydraulic module;
setting preset water outlet temperature values under different modes of the hydraulic module; and controlling the hydraulic module to operate according to operation modes set by temperature controllers and preset water outlet temperature values corresponding to the set temperatures, and controlling a cooling mode or a heating mode to be operated preferentially according to a comparison result of an outdoor ambient temperature and a third temperature preset value when the hydraulic module simultaneously receives the operation modes of cooling and heating.

Through connection and control manners of the temperature controllers in the rooms and the hydraulic module as well as the control module and the hydraulic module, the temperature in each room is independently controlled, the system structure is simplified, the system cost is lowered, and cooling and heating are achieved through water circulation to improve the comfort of the system; and when different cooling/heating requirements of different rooms are received, the operation mode that is selected preferentially is judged in combination with the outdoor ambient temperature, so that different requirements of different rooms are met while the system energy consumption is lowered.

The above-mentioned embodiments are only preferred embodiments of the present invention, and do not limit the present invention in any form. Any person skilled in the art, without departing from the scope of the technical solution of the present invention defined in the appended claims, utilizes the technical content disclosed above to make more possible changes and modifications to the technical solution of the present invention, or modifications are not intended to limit equivalent embodiments of the present invention. Therefore, all equivalent changes made according to the idea of the present invention without departing from the content of the technical solution of the present invention should be included within the protection scope of the present invention, as defined by the appended claims.

## Claims

1. A hydraulic module (1) and a hydraulic module control system for a floor heating multi-split air conditioner, the floor heating multi-split air conditioner comprising the hydraulic module (1) and a plurality of floor heating modules (2) connected with the hydraulic module (1), and the plurality of floor heating modules (2) being correspondingly arranged in a plurality of rooms, wherein the hydraulic module control system comprises: a control module (4) and a plurality of temperature controllers (3) corresponding to the plurality of rooms,
wherein the temperature controllers (3) are in signal connection with the hydraulic module (1), and are configured to set a set temperature in each room and an operation mode of the hydraulic module (1);
wherein the control module (4) is in signal connection with the hydraulic module (1), and is configured to: set preset water outlet temperature values under the different operation modes of the hydraulic module (1); and control the hydraulic module (1) to operate according to received operation modes set by the temperature controllers (3) and preset water outlet temperature values corresponding to the set temperatures, and control the hydraulic module (1) to operate in a cooling mode or a heating mode;
wherein the hydraulic module (1) comprises a water inlet pipe (11), a water outlet pipe (12), a master two-way valve (13), a master three-way valve (14) and a water tank (15), an inlet end of each floor heating module (2) communicates with the water outlet pipe (12), an outlet end of each floor heating module (2) communicates with the water inlet pipe (11), each floor heating module (2) is provided with a separate valve element (20), and the master three-way valve (14) is connected with the water outlet pipe (12), the water tank (15) and the inlet ends of the plurality of floor heating modules (2); the master two-way valve (13) is connected with the outlet ends of the plurality of floor heating modules (2) and the water inlet pipe (11); and
wherein the hydraulic module (1) further comprises a hydraulic heat exchanger (16), a built-in water pump (17), an electric heating unit (18) and an external water pump (19), the hydraulic heat exchanger (16) comprises a first joint connected with an outdoor unit high-pressure air pipe, a second joint connected with an outdoor unit liquid pipe, a third joint connected with the built-in water pump (17) and a fourth joint connected with the electric heating unit (18), an inlet of the built-in water pump (17) is connected with the water inlet pipe (11), an outlet of the electric heating unit (18) is connected with the water outlet pipe (12), and the external water pump (19) is arranged between the outlet end and the master two-way valve (13).

2. The hydraulic module (1) and the hydraulic module control system according to claim 1, wherein the control module (4) is configured to control the hydraulic module (1) to operate in a cooling mode or a heating mode according to a comparison result of an outdoor ambient temperature and a first temperature preset value when both a cooling operation mode and a heating operation mode are received

3. The hydraulic module (1) and the hydraulic module control system according to claim 1 or 2, wherein when the hydraulic module (1) operates in the cooling mode, the built-in water pump (17) and the external water pump (19) are controlled to be started, the separate valve elements (20) corresponding to a heating room and a shut-down room respectively are controlled to be closed, and the separate valve element (20) corresponding to a cooling room is controlled to be opened; and
when the hydraulic module (1) operates in the heating mode, the built-in water pump (17) and the external water pump (19) are controlled to be started, the separate valve elements (20) corresponding to the cooling room and the shut-down room respectively are controlled to be closed, and the separate valve element corresponding to the heating room is controlled to be opened.

4. The hydraulic module (1) and the hydraulic module control system according to any preceding claim, further comprising a temperature detection module (31), configured to detect a room temperature in each room; wherein
the control module (4) is configured to: control opening and closing of a separate valve element (20) in each room according to a comparison result of the room temperature in each room and the corresponding set temperature, and control the hydraulic module (1) to shut down when the room temperatures in all the rooms reach the set temperature.

5. The hydraulic module (1) and the hydraulic module control system according to claim 4, wherein when a difference value between the room temperature in each room and the set temperature is greater than a second temperature preset value and lasts for a predetermined period of time, the temperature controller (3) in the room sends a request to the hydraulic module (1), and the hydraulic module (1) increases the amount of heating/cooling by controlling and modifying a set temperature correction value and fixing the built-in water pump (17) to a maximum gear.

6. The hydraulic module (1) and the hydraulic module control system according to any one of claims 1 to 5, further comprising an infrared detector (32), configured to detect whether a person is in each room, wherein the control module (4) adjusts the set temperature or controls starting and shutdown of the hydraulic module (1) according to a detection result of the infrared detector (32).

7. The hydraulic module (1) and the hydraulic module control system according to any one of claims 1 to 6, further comprising an ambient brightness detection module (33), configured to detect brightness in each room, wherein the control module (4) controls a rotating speed of an indoor fan of the floor heating multi-split air conditioner, a rotating speed of the built-in water pump (17) and a rotating speed of the external water pump (19) according to a brightness detection result of the ambient brightness detection module (33).

8. The hydraulic module (1) and the hydraulic module control system according to any preceding claim, wherein the control module (4) is further configured to: set starting time and a starting period of a domestic hot water mode operated by the hydraulic module (1), and control the master two-way valve (13) and the external water pump (19) to be closed and shut down and control the master three-way valve (14) to be opened during the starting time.

9. A control method of the hydraulic module (1) and the hydraulic module control system according to any one of claims 1 to 8, comprising the following steps:
setting a set temperature in each room and an operation mode of the hydraulic module (1);
setting preset water outlet temperature values under different operation modes of the hydraulic module (1); and controlling the hydraulic module (1) to operate according to the operation modes set by temperature controllers (3) and preset water outlet temperature values corresponding to the set temperatures, and controlling a cooling mode or a heating mode to be operated preferentially according to a comparison result of an outdoor ambient temperature and a third temperature preset value when the hydraulic module (1) simultaneously receives the operation modes of cooling and heating.

## Patentansprüche

1. Hydraulikmodul (1) und Hydraulikmodulsteuerungssystem für eine Multisplit-Bodenheizungsklimaanlage, wobei die Multisplit-Bodenheizungsklimaanlage das Hydraulikmodul (1) und eine Vielzahl von mit dem Hydraulikmodul (1) verbundenen Bodenheizungsmodulen (2) umfasst, wobei die Vielzahl von Bodenheizungsmodulen (2) entsprechend in einer Vielzahl von Räumen angeordnet ist, wobei das Hydraulikmodulsteuerungssystem Folgendes umfasst: ein Steuerungsmodul (4) und eine Vielzahl von der Vielzahl von Räumen entsprechenden Temperatursteuerungen (3),
wobei die Temperatursteuerungen (3) in Signalverbindung mit dem Hydraulikmodul (1) stehen und zum Einstellen einer Solltemperatur in jedem Raum und eines Betriebsmodus des Hydraulikmoduls (1) konfiguriert sind;
wobei das Steuerungsmodul (4) in Signalverbindung mit dem Hydraulikmodul (1) steht und zu Folgendem konfiguriert ist:
Einstellen von voreingestellten Wasserauslasstemperaturwerten unter den verschiedenen Betriebsmodi des Hydraulikmoduls (1);
und Steuern des Hydraulikmoduls (1) zum Arbeiten gemäß empfangenen Betriebsmodi, die durch die Temperatursteuerungen (3) und die den Solltemperaturen entsprechenden voreingestellten Wasserauslasstemperaturwerten eingestellt sind, und Steuern des Hydraulikmoduls (1) zum Arbeiten in einem Kühlmodus oder einem Heizmodus;
wobei das Hydraulikmodul (1) ein Wassereinlassrohr (11), ein Wasserauslassrohr (12), ein Master-Zweiwegeventil (13), ein Master-Dreiwegeventil (14) und einen Wassertank (15) umfasst, ein Einlassende jedes Bodenheizungsmoduls (2) mit dem Wasserauslassrohr (12) in Verbindung steht, ein Auslassende jedes Bodenheizungsmoduls (2) mit dem Wassereinlassrohr (11) in Verbindung steht, jedes Bodenheizungsmodul (2) mit einem separaten Ventilelement (20) bereitgestellt ist und das Master-Dreiwegeventil (14) mit dem Wasserauslassrohr (12), dem Wassertank (15) und dem Einlassende der Vielzahl von Bodenheizungsmodulen (2) verbunden ist; das Master-Zweiwegeventil (13) mit dem Auslassende der Vielzahl von Bodenheizungsmodulen (2) und dem Wassereinlassrohr (11) verbunden ist; und
wobei das Hydraulikmodul (1) ferner einen hydraulischen Wärmetauscher (16), eine eingebaute Wasserpumpe (17), eine elektrische Heizeinheit (18) und eine externe Wasserpumpe (19) umfasst, der hydraulische Wärmetauscher (16) ein erstes mit einem Hochdruckluftrohr einer Außeneinheit verbundenes Gelenk, ein zweites mit einem Flüssigkeitsrohr der Außeneinheit verbundenes Gelenk, ein drittes mit der eingebauten Wasserpumpe (17) verbundenes Gelenk und ein viertes mit der elektrischen Heizeinheit (18) verbundenes Gelenk umfasst, ein Einlass der eingebauten Wasserpumpe (17) mit dem Wassereinlassrohr (11) verbunden ist, ein Auslass der elektrischen Heizeinheit (18) mit dem Wasserauslassrohr (12) verbunden ist und die externe Wasserpumpe (19) zwischen dem Auslassende und dem Master-Zweiwegeventil (13) angeordnet ist.

2. Hydraulikmodul (1) und Hydraulikmodulsteuerungssystem nach Anspruch 1, wobei das Steuerungsmodul (4) zum Steuern des Hydraulikmoduls (1) konfiguriert ist, in einem Kühlmodus oder einem Heizmodus gemäß einem Vergleichsergebnis einer Außenumgebungstemperatur und eines ersten Temperaturvoreinstellwerts zu arbeiten, wenn sowohl ein Kühlbetriebsmodus als auch ein Heizbetriebsmodus empfangen werden.

3. Hydraulikmodul (1) und Hydraulikmodulsteuerungssystem nach Anspruch 1 oder 2, wobei die eingebaute Wasserpumpe (17) und die externe Wasserpumpe (19) zum Starten gesteuert werden, die separaten einem Heizraum bzw. einem Abschaltraum entsprechenden Ventilelemente (20) zum Schließen gesteuert werden und das einem Kühlraum entsprechende separate Ventilelement (20) zum Öffnen gesteuert wird, wenn das Hydraulikmodul (1) im Kühlmodus arbeitet; und
die eingebaute Wasserpumpe (17) und die externe Wasserpumpe (19) zum Starten gesteuert werden, die dem Kühlraum bzw. dem Abschaltraum entsprechenden separaten Ventilelemente (20) zum Schließen gesteuert werden und das dem Heizraum entsprechende separate Ventilelement zum Öffnen gesteuert wird, wenn das Hydraulikmodul (1) im Heizmodus arbeitet.

4. Hydraulikmodul (1) und Hydraulikmodulsteuerungssystem nach einem der vorhergehenden Ansprüche, ferner umfassend ein Temperaturerfassungsmodul (31), das zum Erfassen einer Raumtemperatur in jedem Raum konfiguriert ist; wobei
das Steuerungsmodul (4) zu Folgendem konfiguriert ist: Steuern des Öffnens und Schließens eines separaten Ventilelements (20) in jedem Raum gemäß einem Vergleichsergebnis der Raumtemperatur in jedem Raum und der entsprechenden Solltemperatur und Steuern des Hydraulikmoduls (1) zum Abschalten, wenn die Raumtemperatur in allen Räumen die Solltemperatur erreicht.

5. Hydraulikmodul (1) und Hydraulikmodulsteuerungssystem nach Anspruch 4, wobei die Temperatursteuerung (3) in dem Raum eine Anfrage an das Hydraulikmodul (1) sendet und das Hydraulikmodul (1) die Menge von Heizung/Kühlung durch Steuern und Modifizieren eines Solltemperaturkorrekturwerts und Fixieren der eingebauten Wasserpumpe (17) auf eine maximale Übersetzung erhöht, wenn ein Differenzwert zwischen der Raumtemperatur in jedem Raum und der Solltemperatur größer ist als ein zweiter Temperaturvoreinstellwert und für eine vorbestimmte Zeitdauer anhält.

6. Hydraulikmodul (1) und Hydraulikmodulsteuerungssystem nach einem der Ansprüche 1 bis 5, ferner umfassend einen Infrarotdetektor (32), der zum Erfassen konfiguriert ist, ob sich eine Person in jedem Raum befindet, wobei das Steuerungsmodul (4) die Solltemperatur anpasst oder Starten und Abschalten des Hydraulikmoduls (1) gemäß einem Erfassungsergebnis des Infrarotdetektors (32) steuert.

7. Hydraulikmodul (1) und Hydraulikmodulsteuerungssystem nach einem der Ansprüche 1 bis 6, ferner umfassend ein Umgebungshelligkeitserfassungsmodul (33), das zum Erfassen von Helligkeit in jedem Raum konfiguriert ist, wobei das Steuerungsmodul (4) eine Drehzahl eines Innenraumlüfters der Multisplit-Bodenheizungsklimaanlage, eine Drehzahl der eingebauten Wasserpumpe (17) und eine Drehzahl der externen Wasserpumpe (19) gemäß einem Helligkeitserfassungsergebnis des Umgebungshelligkeitserfassungsmoduls (33) steuert.

8. Hydraulikmodul (1) und Hydraulikmodulsteuerungssystem nach einem der vorhergehenden Ansprüche, wobei das Steuerungsmodul (4) ferner zu Folgendem konfiguriert ist: Einstellen einer Startzeit und einer Startdauer eines Haushaltswarmwassermodus, der durch das Hydraulikmodul (1) betrieben wird, und Steuern des Schließens und Abschaltens des Master-Zweiwegeventils (13) und der externe Wasserpumpe (19) und Steuern des Master-Dreiwegeventils (14) zum Öffnen während der Startzeit zu steuern.

9. Steuerungsverfahren des Hydraulikmoduls (1) und des Hydraulikmodulsteuerungssystems nach einem der Ansprüche 1 bis 8, umfassend die folgenden Schritte:
Einstellen einer Solltemperatur in jedem Raum und eines Betriebsmodus des Hydraulikmoduls (1);
Einstellen von voreingestellten Wasserauslasstemperaturwerten unter verschiedenen Betriebsmodi des Hydraulikmoduls (1); und
Steuern des Hydraulikmoduls (1) zum Arbeiten gemäß den Betriebsmodi, die durch Temperatursteuerungen (3) und den Solltemperaturen entsprechende voreingestellte Wasserauslasstemperaturwerten eingestellt sind, und Steuern eines Kühlmodus oder eines Heizmodus zum Arbeiten vorzugsweise gemäß einem Vergleichsergebnis einer Außenumgebungstemperatur und eines dritten Temperaturvoreinstellwerts, wenn das Hydraulikmodul (1) die Betriebsmodi Kühlen und Heizen gleichzeitig empfängt.

## Revendications

1. Module hydraulique (1) et système de commande de module hydraulique pour un climatiseur multisplit à chauffage par le sol, le climatiseur multisplit à chauffage par le sol comprenant le module hydraulique (1) et une pluralité de modules de chauffage par le sol (2) connectés au module hydraulique (1), et la pluralité de modules de chauffage par le sol (2) étant disposées de manière correspondante dans une pluralité de pièces, dans lequel le système de commande de module hydraulique comprend : un module de commande (4) et une pluralité de régulateurs de température (3) correspondant à la pluralité de pièces,
dans lequel les dispositifs de commande de température (3) sont en connexion de signal avec le module hydraulique (1), et sont configurés pour régler une température de consigne dans chaque pièce et un mode de fonctionnement du module hydraulique (1) ;
dans lequel le module de commande (4) est en connexion de signal avec le module hydraulique (1), et est configuré pour : régler des valeurs de température de sortie d'eau prédéfinies dans les différents modes de fonctionnement du module hydraulique (1) ;
et commander le module hydraulique (1) pour fonctionner selon des modes de fonctionnement reçus définis par les dispositifs de commande de température (3) et des valeurs de température de sortie d'eau prédéfinies correspondant aux températures définies, et commander le module hydraulique (1) pour fonctionner dans un mode de refroidissement ou un mode de chauffage ;
dans lequel le module hydraulique (1) comprend un tuyau d'entrée d'eau (11), un tuyau de sortie d'eau (12), une vanne principale à deux voies (13), une vanne principale à trois voies (14) et un réservoir d'eau (15), une extrémité d'entrée de chaque module de chauffage par le sol (2) communique avec le tuyau de sortie d'eau (12), une extrémité de sortie de chaque module de chauffage par le sol (2) communique avec le tuyau d'entrée d'eau (11), chaque module de chauffage par le sol (2) est fournit avec un élément de vanne séparé (20), et la vanne principale à trois voies (14) est reliée au tuyau de sortie d'eau (12), au réservoir d'eau (15) et aux extrémités d'entrée de la pluralité de modules de chauffage par le sol (2) ; la vanne principale à deux voies (13) est reliée aux extrémités de sortie de la pluralité de modules de chauffage par le sol (2) et au tuyau d'entrée d'eau (11) ; et
dans lequel le module hydraulique (1) comprend également un échangeur de chaleur hydraulique (16), une pompe à eau intégrée (17), une unité de chauffage électrique (18) et une pompe à eau externe (19), l'échangeur de chaleur hydraulique (16) comprend un premier joint relié à un tuyau d'air haute pression d'unité extérieure, un second joint relié à un tuyau de liquide d'unité extérieure, un troisième joint relié à la pompe à eau intégrée (17) et un quatrième joint relié à l'unité de chauffage électrique (18), une entrée de la pompe à eau intégrée (17) est reliée au tuyau d'entrée d'eau (11), une sortie de l'unité de chauffage électrique (18) est reliée au tuyau de sortie d'eau (12), et la pompe à eau externe (19) est disposée entre l'extrémité de sortie et la vanne à deux voies principale (13).

2. Module hydraulique (1) et système de commande de module hydraulique selon la revendication 1, dans lesquels le module de commande (4) est configuré pour commander le module hydraulique (1) pour fonctionner dans un mode de refroidissement ou un mode de chauffage selon un résultat de comparaison d'une température ambiante extérieure et d'une première valeur prédéfinie de température lorsqu'un mode de fonctionnement de refroidissement et un mode de fonctionnement de chauffage sont tous deux reçus.

3. Module hydraulique (1) et système de commande de module hydraulique selon la revendication 1 ou 2, dans lesquels, lorsque le module hydraulique (1) fonctionne en mode refroidissement, la pompe à eau intégrée (17) et la pompe à eau externe (19) sont commandées pour être démarrées, les éléments de vanne séparés (20) correspondant respectivement à une chambre de chauffage et à une chambre d'arrêt sont commandés pour être fermés, et l'élément de vanne séparé (20) correspondant à une chambre de refroidissement est commandé pour être ouvert ; et
lorsque le module hydraulique (1) fonctionne en mode chauffage, la pompe à eau intégrée (17) et la pompe à eau externe (19) sont commandées pour être démarrées, les éléments de vanne séparés (20) correspondant respectivement à la chambre de refroidissement et à la chambre d'arrêt sont commandés pour être fermés, et l'élément de vanne séparé correspondant à la chambre de chauffage est commandé pour être ouvert.

4. Module hydraulique (1) et système de commande de module hydraulique selon une quelconque revendication précédente, comprenant également un module de détection de température (31), configuré pour détecter une température ambiante dans chaque pièce ; dans lequel
le module de commande (4) est configuré pour : commander l'ouverture et la fermeture d'un élément de vanne séparé (20) dans chaque pièce selon un résultat de comparaison de la température ambiante dans chaque pièce et de la température de consigne correspondante, et commander le module hydraulique (1) pour qu'il s'arrête lorsque les températures ambiantes dans toutes les pièces atteignent la température de consigne.

5. Module hydraulique (1) et système de commande de module hydraulique selon la revendication 4, dans lesquels lorsqu'une valeur de différence entre la température ambiante dans chaque pièce et la température de consigne est supérieure à une seconde valeur de consigne de température et dure pendant une période de temps prédéterminée, le contrôleur de température (3) dans la pièce envoie une demande au module hydraulique (1), et le module hydraulique (1) augmente la quantité de chauffage/refroidissement en contrôlant et en modifiant une valeur de correction de température de consigne et en fixant la pompe à eau intégrée (17) à un rapport maximal.

6. Module hydraulique (1) et système de commande de module hydraulique selon l'une quelconque des revendications 1 à 5, comprenant également un détecteur infrarouge (32), configuré pour détecter si une personne se trouve dans chaque pièce, dans lequel le module de commande (4) ajuste la température de consigne ou commande le démarrage et l'arrêt du module hydraulique (1) selon un résultat de détection du détecteur infrarouge (32).

7. Module hydraulique (1) et système de commande de module hydraulique selon l'une quelconque des revendications 1 à 6, comprenant également un module de détection de luminosité ambiante (33), configuré pour détecter la luminosité dans chaque pièce, dans lequel le module de commande (4) commande une vitesse de rotation d'un ventilateur intérieur du climatiseur multi-split à chauffage par le sol, une vitesse de rotation de la pompe à eau intégrée (17) et une vitesse de rotation de la pompe à eau externe (19) selon un résultat de détection de luminosité du module de détection de luminosité ambiante (33).

8. Module hydraulique (1) et système de commande de module hydraulique selon une quelconque revendication précédente, dans lesquels le module de commande (4) est en outre configuré pour : régler l'heure de démarrage et une période de démarrage d'un mode d'eau chaude sanitaire actionné par le module hydraulique (1), et commander la fermeture et l'arrêt de la vanne principale à deux voies (13) et de la pompe à eau externe (19) et commander l'ouverture de la vanne principale à trois voies (14) pendant l'heure de démarrage.

9. Procédé de commande du module hydraulique (1) et système de commande du module hydraulique selon l'une quelconque des revendications 1 à **8,** comprenant les étapes suivantes :
le réglage d'une température de consigne dans chaque pièce et d'un mode de fonctionnement du module hydraulique (1) ;
le réglage des valeurs de température de sortie d'eau préréglées sous différents modes de fonctionnement du module hydraulique (1) ; et commander le module hydraulique (1) pour fonctionner selon les modes de fonctionnement réglés par des dispositifs de commande de température (3) et des valeurs de température de sortie d'eau préréglées correspondant aux températures réglées, et commander un mode de refroidissement ou un mode de chauffage à faire fonctionner de préférence selon un résultat de comparaison d'une température ambiante extérieure et d'une troisième valeur de température préréglée lorsque le module hydraulique (1) reçoit simultanément les modes de fonctionnement de refroidissement et de chauffage.
